# EUROPEAN PATENT SPECIFICATION

(11) **EP 3 298 873 B1**
(45) Date of publication and mention of the grant of the patent: **04.03.2020**
(21) Application number: 16306208.6
(22) Date of filing: 21.09.2016
(51) Int. Cl.: A01B 69/04, A01D 41/127

(54) **CONTROL DEVICE FOR A VEHICLE, CORRESPONDING VEHICLE AND METHOD**
STEUERUNGSVORRICHTUNG FÜR EIN FAHRZEUG, ENTSPRECHENDES FAHRZEUG UND VERFAHREN
DISPOSITIF DE COMMANDE POUR UN VÉHICULE, VÉHICULE ET PROCÉDÉ CORRESPONDANTS

(43) Date of publication of application: 28.03.2018
(73) Proprietor: EXEL INDUSTRIES, 51200 Epernay (FR)
(72) Inventor: GALLMEIER, Michael, 84061 Ergoldsbach (DE)
(74) Representative: Lavoix

(56) References cited:
- EP-A2- 2 020 169
- WO-A1-2013/169919
- US-A1- 2008 249 692
- US-A1- 2009 216 406

## Description

The present invention relates to a control device according to the preamble of claim 1.

Such control devices are known in the prior art for steering a harvesting vehicle along the rows of a field to be harvested, for example a beet crop field.

US2008/249692 discloses a vehicle path generation and steering device. WO2013/169919 discloses a guiding device for guiding a vehicle. Both disclose the preamble of claim 1.

Known beet harvester automatic steering systems use mechanical sensors to detect the position of beet crop and the steering axles of the vehicle are controlled based on the detection of the root crop.

Additionally, during seeding crop, a map of seeding positions is generated based on the GPS information of the vehicle during seeding. The GPS based map generated during seeding is then used for steering the harvesting vehicle during harvesting.

The harvesting vehicle harvests the crop according to successive rows. When reaching the end of a row during harvesting, especially inexperienced drivers take a long time to correctly reposition the vehicle at the beginning of the next row if they achieve this at all.

Small errors of positioning can be compensated by the crop sensors. However, bigger mistakes in the positioning that are in the order of the distance of two adjacent beets cannot be corrected by the steering control based only on sensors.

Also, a GPS based map of seeded plants is not or rarely available, in particular for some type of crop such as sugar beets.

Besides, WO2013/071190 discloses a control device for a vehicle which generally allows controlling a vehicle in a more or less unknown environment.

The invention seeks to overcome the drawbacks of the prior art and seeks to achieve an efficient and time saving control of a vehicle that is to be steered along a determined swath path. In particular, the invention should allow steering the harvesting machine into an ideal pose at the beginning of a row to be treated with economic means.

In order to solve one or more of these problems, the invention relates to a control device according to claim 1.

Advantageous embodiments of the invention are stated in dependent claims 2 to 9.

The invention relates also to a vehicle comprising the features of claims 10 or 11.

The invention refers also to a method of treating a field according to claims 12 or 13.

The invention will be better understood in light of the following description given only for illustration purposes and referring to the annexed drawings, on which:
- figure 1 is a schematic view of a field to be treated by a vehicle comprising a control device according to the invention, and

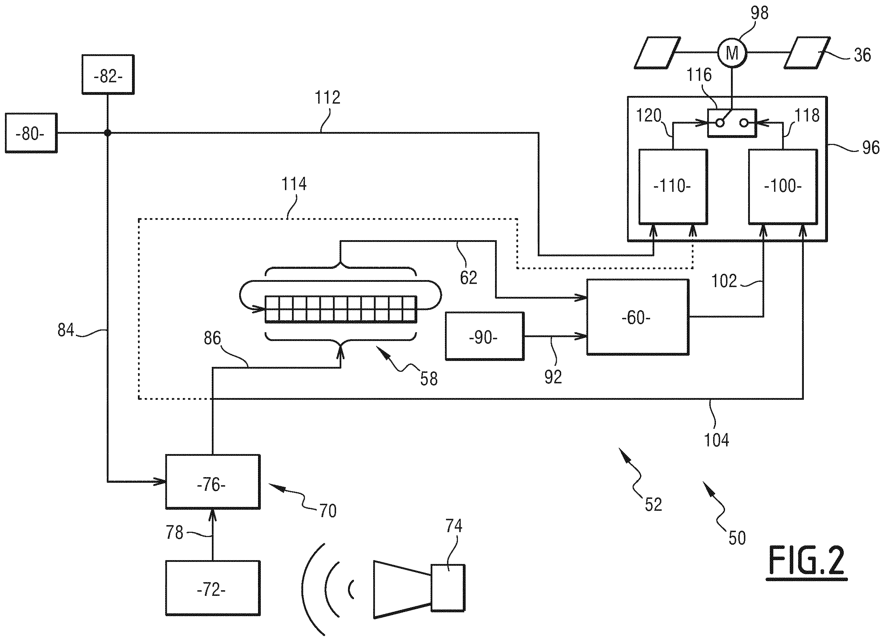

- figure 2 is a schematic view of the control device according to the invention and mounted on the vehicle of figure 1.

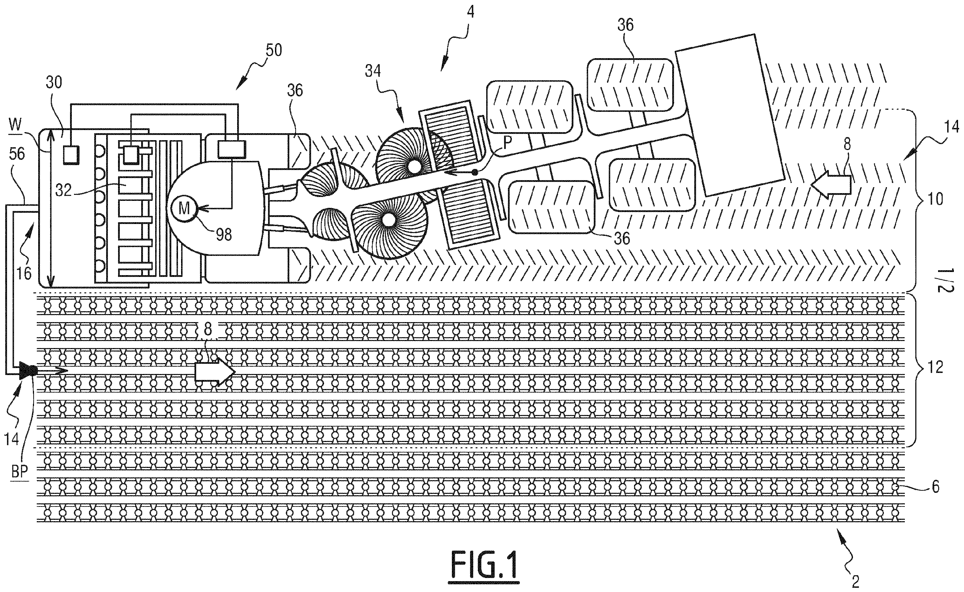

Figure 1 shows a field 2 that is to be treated by a vehicle 4. The field comprises for example crop 6, such as sugar beets or other root crop.

The field is to be treated by the vehicle 4 according to a predetermined swath path 8, the swath path 8 comprising at least two successive rows 10 and 12 which are a first row and a second row. The rows 10, 12 are defined by the working width W of the vehicle 4 and include a given number of adjacent single crop lines, in the example 6 single crop lines. Generally, the path comprises instead of rows, lanes that are defined by the working width of the vehicle 4 and a directrix line along which the vehicle needs to be moved during treatment. In the particular case explained below, the lanes are represented by rows 10 and 12. In the following, row is assumed to be a special case of a lane.

The field 2 has borders and each row 10, 12 has a row beginning 14 and a row end 16 defined by one of the borders. As the vehicle treats the field, for example in an S-like manner, the beginning of second row 12 is adjacent to the end of first row 10. The rows 10 and 12 are for example parallel one to another and are adjacent one to another. However, in particular in case of a multitude of vehicles 4 treating the field, the first and second rows 10 and 12 might not be adjacent but are separated by interposed rows. Alternatively the first and second rows 10 and 12 are not parallel one to another, but are angularly offset one with respect to another, for example in case the field has a non-rectangular shape.

The vehicle 4 defines a pose P which indicates the position of the vehicle with respect to the field 2 as well as the orientation of each of its components with respect to the field. The pose P therefore unequivocally defines the configuration of the vehicle with respect to the field 2. Alternatively, the pose P indicates the position and orientation of a portion of the components of the vehicle that is used for treating the field 2. For example the pose P can be defined only by components that are acting on the crop in the field, such as spray heads, cutters, uprooting elements. In case of a harvesting vehicle for beet crop, comprising a leaf cutting section 30 and an uprooting section 32 (see below), the pose P can be defined only by the position and orientation of the leaf cutting section 30 and/or the uprooting section 32.

The row beginning 14 of the second row 12 defines a beginning pose BP of the vehicle which is the pose of the vehicle for ideally treating the second row 12 from its row beginning 14. The beginning pose is the pose in which the crop 6 nearest to the row beginning 14 is treated by the vehicle 4 and/or the subsequent crop in the second row 12 can as well be treated without any loss or with only minimum loss. The beginning pose BP is also the pose of the vehicle in which all of the crop of the second row 12 can be harvested, with the vehicle taking a minimum treatment time for the second row or minimum path length in the second row.

The vehicle 4 is for example a harvesting vehicle for beet crop and comprises a leaf cutting section 30 and uprooting section 32 and root cleaning and transportation devices 34. However the vehicle is only used for illustration purposes and could be any other agricultural vehicle. For example, the vehicle 4 can be a vehicle for spraying liquids on a field with or without plants, such as a vehicle adapted to apply fertilizer, herbicides or pesticides on the field.

The vehicle 4 comprises wheels 36. Alternatively, the vehicle comprises tracks or a crawler chassis.

The vehicle 4 comprises a control device 50 adapted to control the movement and displacement of the vehicle 4. The control device is adapted to gather information about the first row during treatment of the first row by the vehicle.

The control device 50 comprises a target path generator device 52 adapted for generating a target path 56 for steering the vehicle 4 to the beginning pose BP based on information about the first row 10.

The target path generator device 52 comprises a position memory 58 adapted to store information representing a succession of positions of the vehicle 4 when treating the first row 10. Additionally, the position memory 58 may also be adapted to store information representing the pose P of the vehicle in each of the stored position information.

The control device 50 comprises also a path generator module 60 adapted to generate the target path 56 based on the information representing the succession of positions stored in the position memory 58. To this end the position memory 58 is linked to the path generator module 60 via a connection 62.

The position memory 58 is advantageously a ring buffer memory in which the information representing the succession of positions comprises information about a least recent position of the vehicle 4 and the ring buffer memory is adapted to, when adding information representing a new or current position of the vehicle to the ring buffer memory, overwrite the information about the least recent position of the vehicle by the information representing the new or current position of the vehicle. The ring buffer memory 58 has a storage capacity for information representing at least one position and at most a maximum number of positions. The maximum number of position is advantageously comprised between 1 and 100. This results in a small memory requirement of the device while allowing determining with sufficient reliability an average vector of the path. The ring buffer memory has also storage capacity for storing corresponding pose information for each position that is stored.

The target path generator device 52 comprises furthermore position detection means 70 adapted to detect the current position of the vehicle. The position detection means 70 are adapted to detect the current position of the vehicle with reference to the field, in particular with reference to the first row 10 during treatment of the first row.

The position detection means 70 comprise for example a GPS reception module 72 adapted for receiving GPS signal from a GPS satellite 74. The position detection means 70 comprise furthermore a position detection module 76. The GPS module is therefore adapted to determine the absolute position of the vehicle in the field.

The GPS module 72 is linked via a connection 78 to the position detection module 76, through which the position detection module 76 receives the signals representing the GPS position of the vehicle.

The position detection means 70 include furthermore at least a position sensor adapted to detect the position of the vehicle with respect to the field and in particular with respect to crop 6 to be treated. The position sensor is therefore capable of detecting the relative position of the vehicle with respect to the field or the current row. In the present embodiment the position sensor comprise a beet sensor for leaf cutting 80 and a beet sensor for uprooting 82. The position sensors are connected via a connection 84 to the position detection module 76 and the position detection modules receives the detection signals from the sensor/s 80, 82 through the connection 84. Generally, the position sensors can comprise crop sensors, in particular root crop sensors. The position sensor(s) can comprise a mechanical sensor such as a finger linked to a potentiometer or a mechanical switch or ultrasound sensors. The finger is connected to a spring urging the finger in a neutral position when not in contact with a crop. Alternatively, the position detection means 70 comprise only one of the sensor 80 or 82 or other sensors.

The position detection means 70, in the present instance the position detection module 76, is connected via a connection 86 to the position memory 58 and is adapted to write information representing the current position P and optionally further current pose information of the vehicle 4 to the position memory 58.

The target path generator device 52 comprises also a parameter memory 90 storing parameter information about the vehicle 4. The parameter information about the vehicle comprises in particular the geometry of the vehicle or the configuration of the vehicle such as the cinematics, the number and degrees of freedom of the axles and wheels, the working width W of the tools such as the leaf cutters and the uprooting section.

The parameter memory 90 is connected via a connection 92 to the path generator module 60 and the path generator module 60 is adapted to generate the target path 56 based on the parameter information contained in the parameter memory.

Consequently, the path generator module 60 takes into account the geometry and the configuration of the vehicle 4 when calculating the path to the beginning pose BP.

The path generator module 60 may also be adapted to determine the beginning pose BP of the vehicle 4 based on the parameter memory information and/or the information about the first row 10, before generating the target path 56.

The vehicle 4 comprises also steering means 96 adapted to control the displacement of the vehicle 4. In particular, the steering means 96 are adapted to control the steering angle of the wheels 36 and the drive of the wheels by controlling a steering and/or drive motor 98.

The steering means 96 comprise a target path steering module 100 which is adapted to generate steering commands based on the target path generated by the path generator module 60 and adapted to steer the vehicle 4 to the beginning pose along the target path 56. To this end the path generator module 60 is linked to the target path steering module 100 via a connection 102 and the module 100 receives the information about the target path 56 from module 60. The target path steering module 100 is also connected via a connection 104 to the position detection module 76 and receives information about the current position of the vehicle 4 with respect to the field from the position detection module 76. The target path steering module 100 can also be connected to further sensors indicating the currently position and/or pose of the vehicle.

The steering means 96 may also comprise an in-lane steering module 110 adapted to generate steering commands based on a current position, and in the present embodiment based on or more of the sensors 80 and 82. The in-lane steering module 110 is optionally adapted to generate steering commands based on position information received from the position detection module 76. The in-lane steering module is adapted to maintain a determined position or determined displacement of the vehicle with respect to the current row, which is the row currently treated by the vehicle. To this end, the in-lane steering module 110 may be connected via a connection 112 to the sensors 80 and 82. The sensors 80, 82 detect the position of the vehicle with respect to the current row.

The in-lane steering module 110 may also be linked via a connection 114 to the position detection module 76, which sends current position information to module 110.

The steering means 96 comprise also a switching module 116 adapted to switch alternatively between the in-lane steering module 110 and the target path steering module 100 for steering and displacing the vehicle. The switching module 116 is linked via one connection line 118, 120 to each of the modules 100 and 110 and is adapted to transmit alternatively one or the other of the signals emitted by the modules 100 and 110 to the motor 98 and the wheels 36. The in-lane steering module 110 can also be an in-row steering module, in the case of rows.

The switching module 116 is for example operated by a driver who can therefore put the vehicle during treatment of a row, e.g. the first row 10, in an in-lane mode in which the vehicle is controlled by the in-lane module 110 and at the end of the row put the vehicle in a target path steering mode driving the vehicle to the beginning pose of the next row, e.g. second row 20.

The operation of the vehicle is as follows.

During treatment of the first row 10 the in-lane steering module 110 is connected via switching module 116 to the wheels 36/motor 98 and the sensors 80 and 82 detect the position of the crop 6 to be treated. The in-lane steering module 110 generates steering commands maintaining the vehicle in the first row 10 and aligning the leaf cutting section 30 and uprooting section 32 with respect to the crops to be harvested.

During this period, the position detection module 76 detects the position of the vehicle with respect to the field and writes the current position information successively in the ring buffer 58. Once the ring buffer 58 is full, the least recent information is overwritten by the currently added position information.

When the vehicle 4 reaches the end of row 1, either automatically, or upon an operator input, the control device 50 switches into a target path mode in which the the path generator module 60 generates the beginning pose BP of the vehicle 4 for the next row (second row 12) based on the parameters in the parameter memory 90 and based on the most recent position information in the ring buffer 58. The path generator module 60 may be adapted to use exclusively a portion of the position information in the ring buffer 58 when generating the beginning pose BP of the vehicle 4 for the next row, in which case the module 60 uses exclusively the most recent position information. For example, in case the ring buffer 58 has a capacity corresponding to 100 positions, the path generator module 60 may only use information of the 50 most recent positions and not take into account the 50 least recent positions. Alternatively, the path generator module 60 uses all the position information in the ring buffer 58 when generating the beginning pose BP of the vehicle 4 for the next row.

The frequency of detection of the position stored in the ring buffer 58 and/or the number of positions used by the path generator module 60 is such that the distance of the path used corresponds to a length of between 0 (only one position) and 10m, in particular between 1m and 10m. For example, in case the ring buffer comprises positions having a distance of 50 cm and for taking into account the most recent 5m, then the path generator module uses information corresponding to the most recent 10 positions. This allows for smoothening the path information and reducing the impact of misdetections or plants that are placed out of the row.

The path generator module 60 may be adapted to generate an exit vector, which is the vector of the vehicle or of portions of the vehicle at the end of the first row. The exit vector is generated using the position information in ring buffer 58. Based on the exit vector, the path generator module 60 generated an entry vector, which is the vector of the vehicle or parts of the vehicle to be taken and which is generally a vector being parallel to the exit vector, but with an inverse direction. The entry vector is offset with respect to the exit vector based on the machine parameters and the field layout.

Alternatively, the path generator module might use supplementary information about the field 2 when generating the beginning pose.

Then, the path generator module 60 generates the target path from the current position to the beginning pose BP, and this so that the movement of the vehicle to the beginning pose takes a minimum of time and/or generates a minimum of crop loss. The target path information is then sent from module 60 to the target path steering module 100.

The target path steering module 100 then compares successively the current position of the vehicle 4 indicated by the position detection module 76 with respect to the target path, based on GPS data and/or based on other information about the vehicle, e.g. speed and configuration information collected from sensors, like acceleration or speed sensors, and steers the vehicle along the target path into the beginning pose BP.

Once the beginning pose BP is reached, the switching module 116 switches back to the in-lane steering module 110 which then guides the vehicle along the second row 12. The switching back can be triggered automatically or by an operator input.

It is to be noted that in the present text at each occurrence an element is indicated as "being adapted to execute an action" it is implied that during use the element effectively performs the indicated action. For example, as the target path generator device is explained to be adapted for generating a target path, this means that during operation the target path generator device effectively generates a target path. This applies in an analogous manner to all the other elements disclosed in the present specification.

The elements of the present invention can be embodied by any combination of hard- and software components readily available to the person skilled in the art, as long as they perform the explained way of working. The elements may for example be embodied using CPUs, System-on-Chip, ASICs; FPGAs. The connections disclosed may be any technically feasible connection available to the person skilled in the art, for example wired or wireless connections and optical or electrical connections.

Additionally to the above features, in case the crop has been planted or seeded using GPS data and GPS data representing the position of the planted or seeded crop is available, the device may comprise an initial pose generator based on the data representing the position of the planted or seeded crop. In this case, at the beginning of treating the field, the initial pose generator generates an initial pose representing the ideal or a predetermined pose for starting treatment of the field. An initial pose steering module is adapted to steer the vehicle into the initial pose based solely on the GPS position information, i.e. without information of the sensors 80/82, as they do not detect any crop or plants at this time.

It is also possible to use the data of the seeding machine to work fully automatic along a path stored in a defined path memory of the device, comprising a predefined approximate path for treating the whole field or a significant portion of the field, via GPS (including turn around for next row) and determine the exact path within the approximate path based on the sensors 80/82.

It should be noted that instead of GPS, any other satellite based position detection system can be used.

The device according to the invention allows a reliable treatment of a field, while being economic.

## Claims

1. A control device (50) for a vehicle adapted for treating a field (2) along a predetermined swath path (8),
- the swath path comprising at least two lanes, in particular two successive lanes, namely a first (10) and a second lane (12), the second lane comprising a lane beginning (14) defining a beginning pose (BP) of the vehicle,
- the beginning pose (BP) of the vehicle being the pose of the vehicle for ideally treating the second lane from the lane beginning;
- the control device being adapted to gather information about the first lane during treatment of the first lane by the vehicle; and
- the control device (50) comprising a target path generator device (52) adapted for generating a target path (56) for steering the vehicle to the beginning pose based on information about the first lane,
**characterized in that**
- the target path generator device (52) comprises
∘ a position memory (58) adapted to store information representing a succession of positions of the vehicle when treating the first lane and
∘ a path generator module (60) adapted to generate the target path based on the information representing the succession of positions stored in the position memory.

2. The control device of claim 1 wherein the position memory is a ring buffer memory (58) in which the information representing the succession of positions comprises information about a least recent position of the vehicle, and the ring buffer memory is adapted to, when adding information representing a new position of the vehicle to the ring buffer memory, overwrite the information about the least recent position of the vehicle by the information representing the new position of the vehicle.

3. The control device of claims 1 or 2 wherein the target path generator device comprises
- position detection means (70) adapted to detect the current position of the vehicle, in particular with respect to the first lane, during treatment of the first lane,
and wherein
the position detection means (70) is adapted to write information representing the current position to the position memory.

4. The control device of claim 3, wherein the position detection means (70) comprise
- a GPS reception module (72) and/or
- a position sensor (80, 82) and
the position detection means (70) comprise a position detection module (76) adapted to receive position information from the GPS reception module and/or the position sensor.

5. The control device of claim 4 wherein, in case the control device (50) comprises a position sensor, the position sensor comprises crop sensors, in particular root crop sensors.

6. The control device of any one of claims 1 to 5 wherein
- the target path generator device (52) comprises a parameter memory (90) storing parameter information about the vehicle, in particular about the geometry and/or about the configuration of the vehicle, and wherein
- the parameter memory is connected to the path generator module (60) and the path generator module (60) is adapted to generate the target path (56) based on the parameter information.

7. The control device of any one of the preceding claims wherein
- the vehicle comprises steering means (96) adapted to control the displacement of the vehicle, wherein
- the steering means comprise a target path steering module (100) adapted to generate steering commands, and wherein
- the steering commands are based on the target path and are adapted to steer the vehicle to the beginning pose.

8. The control device of claim 7 wherein
the steering means (96) comprise an in-lane steering module (110) adapted to generate steering commands based on position information generated by a position sensor (80, 82), in particular by the crop sensor, and/or based on position information generated by the position detection module (76) and wherein the steering commands are adapted to maintain a determined position of the vehicle with respect to the current lane.

9. The control device of claim 8 wherein
the steering means (96) comprise a switching module (116) adapted to switch alternatively between the in-lane steering module (110) and the target path steering module (100) for steering the vehicle.

10. A vehicle (4) comprising a control device (50) according to any one of the preceding claims.

11. The vehicle of claim 10 wherein the vehicle is an agricultural vehicle, in particular a harvesting vehicle adapted to harvest crop or a planting vehicle adapted to plant or seed crop, preferably root crop or a treating vehicle for spraying a liquid onto a field.

12. A method of treating a field, using a vehicle of one of the claims 10 or 11, comprising the steps of:
- driving the vehicle along the first lane (10) of the swath path;
- generating a target path (56) to the beginning pose of the vehicle; and
- maneuvering the vehicle (4) along the target path to the beginning pose.

13. The method of claim 12, wherein the lanes are substantially parallel one to another.

## Patentansprüche

1. Steuervorrichtung (50) für ein Fahrzeug, das dafür eingerichtet ist, ein Feld (2) entlang eines festgelegten Schwadweges (8) zu bearbeiten,
- wobei der Schwadweg mindestens zwei Bahnen, insbesondere zwei aufeinanderfolgende Bahnen, umfasst, und zwar eine erste (10) und eine zweite Bahn (12), wobei die zweite Bahn einen Bahnanfang (14) umfasst, der eine Anfangsstellung (BP) des Fahrzeugs definiert,
- wobei die Anfangsstellung (BP) des Fahrzeugs die Stellung des Fahrzeugs für das ideale Bearbeiten der zweiten Bahn vom Bahnanfang aus ist,
wobei die Steuervorrichtung dafür eingerichtet ist, während der Bearbeitung der ersten Bahn durch das Fahrzeug Informationen über die erste Bahn zu gewinnen, und
- die Steuervorrichtung (50) eine Zielweg-Erzeugungseinheit (52) umfasst, die dafür eingerichtet ist, basierend auf Informationen über die erste Bahn einen Zielweg (56) zum Lenken des Fahrzeugs zur Anfangsstellung zu erzeugen,
**dadurch gekennzeichnet, dass**
- die Zielweg-Erzeugungseinheit (52) Folgendes umfasst:
• einen Positionsspeicher (58), der dafür eingerichtet ist, Informationen zu speichern, die eine Folge von Positionen des Fahrzeugs darstellen, wenn dieses die erste Bahn bearbeitet, und
• ein Wegerzeugungsmodul (60), das dafür eingerichtet ist, den Zielweg basierend auf den Informationen zu erzeugen, welche die Folge von Positionen darstellen, die in dem Speicher gespeichert ist.

2. Steuervorrichtung nach Anspruch 1, wobei der Positionsspeicher ein Ringspeicher (58) ist, wobei die Informationen, welche die Folge von Positionen darstellen, Informationen über eine älteste Position des Fahrzeugs umfassen und der Ringspeicher dafür eingerichtet ist, die Informationen über die älteste Position des Fahrzeugs mit den Informationen zu überschreiben, welche die neue Position des Fahrzeugs darstellen, wenn zum Ringspeicher Informationen hinzugefügt werden, die eine neue Position des Fahrzeugs darstellen.

3. Steuervorrichtung nach Anspruch 1 oder 2, wobei die Zielweg-Erzeugungseinheit Folgendes umfasst:
- ein Positionserkennungsmittel (70), das dafür eingerichtet ist, während der Bearbeitung der ersten Bahn die aktuelle Position des Fahrzeugs zu erkennen, insbesondere in Bezug auf die erste Bahn,
und wobei
das Positionserkennungsmittel (70) dafür eingerichtet ist, Informationen, welche die aktuelle Position darstellen, in den Positionsspeicher zu schreiben.

4. Steuervorrichtung nach Anspruch 3, wobei das Positionserkennungsmittel (70) Folgendes umfasst:
- ein GPS-Empfangsmodul (72) und/oder
- einen Positionssensor (80, 82) und
das Positionserkennungsmittel (70) ein Positionserkennungsmodul (76) umfasst, das dafür eingerichtet ist, Positionsinformationen von dem GPS-Empfangsmodul und/oder dem Positionssensor zu empfangen.

5. Steuervorrichtung nach Anspruch 4, wobei, wenn die Steuervorrichtung (50) einen Positionssensor umfasst, der Positionssensor Feldfruchtsensoren umfasst, insbesondere Hackfruchtsensoren .

6. Steuervorrichtung nach einem der Ansprüche 1 bis 5, wobei
- die Zielweg-Erzeugungseinheit (52) einen Parameterspeicher (90) umfasst, der Parameterinformationen über das Fahrzeug speichert, insbesondere über die Geometrie und/oder über die Gestaltung des Fahrzeugs, und wobei
- der Parameterspeicher mit dem Wegerzeugungsmodul (60) verbunden ist und das Wegerzeugungsmodul (60) dafür eingerichtet ist, den Zielweg (56) basierend auf den Parameterinformationen zu erzeugen.

7. Steuervorrichtung nach einem der vorhergehenden Ansprüche, wobei
- das Fahrzeug Lenkmittel (96) umfasst, die dafür eingerichtet sind, die Verlagerung des Fahrzeugs zu steuern, wobei
- die Lenkmittel ein Zielweg-Lenkmodul (100) umfassen, das dafür eingerichtet ist, Lenkbefehle zu erzeugen, und wobei
- die Lenkbefehle auf dem Zielweg basieren und dafür eingerichtet sind, das Fahrzeug zur Anfangsstellung zu lenken.

8. Steuervorrichtung nach Anspruch 7, wobei
die Lenkmittel (96) ein Spurhalte-Lenkmodul (110) umfassen, das dafür eingerichtet ist, basierend auf Positionsinformationen, die von einem Positionssensor (80, 82) erzeugt werden, insbesondere von dem Feldfruchtsensor, und/oder basierend auf Positionsinformationen, die durch das Positionserkennungsmodul (76) erzeugt werden, Lenkbefehle zu erzeugen, und wobei die Lenkbefehle dafür eingerichtet sind, eine bestimmte Position des Fahrzeugs in Bezug auf die aktuelle Bahn beizubehalten.

9. Steuervorrichtung nach Anspruch 8, wobei
die Lenkmittel (96) ein Schaltmodul (116) umfassen, das dafür eingerichtet ist, abwechselnd zwischen dem Spurhalte-Lenkmodul (110) und dem Zielweg-Lenkmodul (100) umzuschalten, um das Fahrzeug zu lenken.

10. Fahrzeug (4), das eine Steuervorrichtung (50) nach einem der vorhergehenden Ansprüche umfasst.

11. Fahrzeug nach Anspruch 10, wobei das Fahrzeug ein Landwirtschaftsfahrzeug ist, insbesondere ein Erntefahrzeug, das dafür eingerichtet ist, Feldfrüchte zu ernten, oder ein Pflanzfahrzeug, das dafür eingerichtet ist, Feldfrüchte zu pflanzen oder zu säen, vorzugsweise Hackfrüchte, oder ein Bearbeitungsfahrzeug zum Versprühen einer Flüssigkeit auf einem Feld.

12. Verfahren zum Bearbeiten eines Feldes mit Hilfe eines Fahrzeugs nach einem der Ansprüche 10 oder 11, folgende Schritte umfassend:
- Fahren des Fahrzeugs entlang der ersten Bahn (10) des Schwadweges,
- Erzeugen eines Zielweges (56) zur Anfangsstellung des Fahrzeugs und
- Bewegen des Fahrzeugs (4) entlang des Zielweges zur Anfangsstellung.

13. Verfahren nach Anspruch 12, wobei die Bahnen im Wesentlichen parallel zueinander liegen.

## Revendications

1. Dispositif de commande (50) pour un véhicule apte à traiter un champ (2) le long d'un trajet d'andain prédéterminé (8),
- le trajet d'andain comprenant au moins deux voies, en particulier deux voies successives, à savoir une première voie (10) et une seconde voie (12), la seconde voie comprenant un début de voie (14) définissant une pose de début (BP) du véhicule ;
- la pose de début (BP) du véhicule correspondant à la pose du véhicule permettant de traiter idéalement la seconde voie à partir du début de voie ;
- le dispositif de commande étant apte à recueillir des informations concernant la première voie pendant le traitement de la première voie par le véhicule ; et
- le dispositif de commande (50) comprenant un dispositif générateur de trajet cible (52) apte à générer un trajet cible (56) pour diriger le véhicule vers la pose de début sur la base d'informations concernant la première voie ;
**caractérisé en ce que**
- le dispositif générateur de trajet cible (52) comprend
∘ une mémoire de position (58) apte à stocker des informations représentant une succession de positions du véhicule lors du traitement de la première voie ; et
∘ un module générateur de trajet (60) apte à générer le trajet cible sur la base des informations représentant la succession de positions stockées dans la mémoire de position.

2. Dispositif de commande selon la revendication 1, dans lequel la mémoire de position est une mémoire tampon annulaire (58) dans laquelle les informations représentant la succession de positions comprennent des informations concernant une position la moins récente du véhicule, et dans lequel la mémoire tampon annulaire est apte à, lors de l'ajout d'informations représentant une nouvelle position du véhicule à la mémoire tampon annulaire, remplacer les informations concernant la position la moins récente du véhicule par les informations représentant la nouvelle position du véhicule.

3. Dispositif de commande selon la revendication 1 ou 2, dans lequel le dispositif générateur de trajet cible comprend :
- un moyen de détection de position (70) apte à détecter la position en cours du véhicule, en particulier par rapport à la première voie, pendant le traitement de la première voie, et dans lequel
le moyen de détection de position (70) est apte à écrire des informations représentant la position en cours dans la mémoire de position.

4. Dispositif de commande selon la revendication 3, dans lequel le moyen de détection de position (70) comprend :
- un module de réception GPS (72) ; et/ou
- un capteur de position (80, 82) ; et
le moyen de détection de position (70) comprend un module de détection de position (76) apte à recevoir des informations de position du module de réception GPS et/ou du capteur de position.

5. Dispositif de commande selon la revendication 4, dans lequel, dans le cas où le dispositif de commande (50) comprend un capteur de position, le capteur de position comprend des capteurs de culture, en particulier des capteurs de racines.

6. Dispositif de commande selon l'une quelconque des revendications 1 à 5 dans lequel :
- le dispositif générateur de trajet cible (52) comprend une mémoire de paramètres (90) stockant des informations de paramètres concernant le véhicule, en particulier concernant la géométrie et/ou la configuration du véhicule, et dans lequel
- la mémoire de paramètres est connectée au module générateur de trajet (60), et le module générateur de trajet (60) est apte à générer le trajet cible (56) sur la base des informations de paramètres.

7. Dispositif de commande selon l'une quelconque des revendications précédentes, dans lequel :
- le véhicule comprend un moyen de direction (96) apte à commander le déplacement du véhicule, dans lequel
- le moyen de direction comprend un module de direction de trajet cible (100) apte à générer des instructions de direction, et dans lequel
- les instructions de direction sont basées sur le trajet cible et sont aptes à diriger le véhicule vers la pose de début.

8. Dispositif de commande selon la revendication 7, dans lequel :
le moyen de direction (96) comprend un module de direction dans la voie (110) apte à générer des instructions de direction sur la base d'informations de position générées par un capteur de position (80, 82), en particulier par le capteur de culture, et/ou sur la base d'informations de position générées par le module de détection de position (76), et dans lequel les instructions de direction sont aptes à maintenir une position déterminée du véhicule relativement à la voie en cours.

9. Dispositif de commande selon la revendication 8 dans lequel :
le moyen de direction (96) comprend un module de commutation (116) apte à commuter alternativement entre le module de direction dans la voie (110) et le module de direction de trajet cible (100) en vue de diriger le véhicule.

10. Véhicule (4) comprenant un dispositif de commande (50) selon l'une quelconque des revendications précédentes.

11. Véhicule selon la revendication 10, dans lequel le véhicule est un véhicule agricole, en particulier un véhicule de récolte apte à récolter une culture, ou un véhicule de plantation apte à planter ou semer des cultures, de préférence des racines, ou un véhicule de traitement destiné à pulvériser un liquide dans un champ.

12. Procédé de traitement d'un champ, utilisant un véhicule selon l'une quelconque des revendications 10 et 11, comprenant les étapes ci-dessous consistant à :
- piloter le véhicule le long de la première voie (10) du trajet d'andain ;
- générer un trajet cible (56) jusqu'à la pose de début du véhicule ; et
- manœuvrer le véhicule (4) le long du trajet cible jusqu'à la pose de début.

13. Procédé selon la revendication 12, dans lequel les voies sont sensiblement parallèles les unes aux autres.
